# EUROPEAN PATENT APPLICATION

(11) **EP 3 046 205 A1**
(43) Date of publication of application: **20.07.2016**
(21) Application number: 16151152.2
(22) Date of filing: 13.01.2016
(51) Int. Cl.: H02J 3/38, H02J 4/00

(54) **LOCALIZED SOURCE SELECTION AND POWER CONVERSION POWER DISTRIBUTION SYSTEM**

(30) Priority: 16.01.2015 US 201514599052
(71) Applicant: Hamilton Sundstrand Corporation, Charlotte, NC 28217 (US)
(72) Inventor: KRENZ, Michael, Roscoe, IL 61073 (US); WAGNER, Carl A., Beloit, WI 53511 (US); WAVERING, Jeffrey T., Rockford, IL 61109 (US)
(74) Representative: Leckey, David Herbert

(57) **Abstract**

A localized source selection and power conversion power distribution system (100) is described herein. In contrast to legacy systems, where multiple bus tie connectors are coupled between the centralized buses, the localized source selection and power conversion power distribution system (100) is, in general, solely linked by a post conversion link. The localized source selection and power conversion power distribution system (100) is also configured to effectively balance the loads of the aircraft. For example, that any power district can draw power from any power source 250A, 250B, 260, 270) at any time.

## Description

### FIELD

The present disclosure relates power distribution systems and more specifically isolated power distributions systems.

### BACKGROUND

Aircraft power distribution systems today have employed centralized busses and centralized power conversion. In response to power being converted to the voltage/frequency specified by the load is it distributed to the load. The lower voltages employed by distribution are associated with heavier gauge wires, connectors, and/or the like. Redundancy is provided by feeds from a plurality of sources to central busses yielding higher impacts of failures and lower granularity in degraded power distribution modes.

Ohm's Law states that Voltage = Current * Resistance. Likewise, Power = Voltage * Current. So, power loss over a transmission line is equal to Current * Current * Resistance, or a squared relationship. Therefore, for the same amount of power delivered, doubling the voltage yields one fourth the loss, and increasing the voltage by 10x yields 1/100th the loss. In aircraft terms, distributing power at 270VDC yields 1/100th the loss of distributing power at 28VDC.

On a large aircraft, in a typical centralized bus architecture there may be approximately 150 distribution wires carrying 28VDC at 50A across a significant distance through the aircraft. #8AWG wire is used along with associated connectors. A 270VDC distribution would only be associated with a current of 6A for the same amount of power transmitted, and therefore would require less than a #18AWG wire and associated connectors.

### SUMMARY

According to various embodiments, a localized source selection and power conversion power distribution system is disclosed herein. The system may include a power block coupled to a plurality of power sources. The power block may include a source selection module. The power block may include a localized converter electrically coupled to the source selection module. The power block may be configured to perform power source selection, power conversion and power distribution to a plurality of end loads. The power source to the system provides at least one of alternating current or direct current. The power sources to the system are at least one of a generator, an auxiliary generator, ram air turbine, fuel cell, solar array or other power generation/storage device.

According to various embodiments, the localized converters may be at one or more inverters or converters. The power block may have bus power control unit data processing capabilities, such as via a processor. The system may include a plurality of virtual essential busses. The system may be disposed on a vehicle, such as a train, airplane, watercraft, air or land vehicle, or may be disposed as an isolated power grid such as an island or remote location. The plurality of end loads coupled to the power block may be logically grouped.

According to various embodiments, a method may include selecting a power source, from a plurality of power sources, to provide power via a source selection module. The method may include receiving the power from the power source. The method may include converting the power to a desired voltage and frequency. The power conversion may be performed by at least one of an inverter or a converter. The method may include distributing the converted power to an end load. The plurality of power sources may be at least one of a generator, an auxiliary generator, or a ram air turbine, fuel cell, solar array, battery or other power generation/storage device.

The end load may be coupled to a virtual essential bus. The source selection module may be disposed on a vehicle. The source selection module may be grouped with a power block, wherein the power block comprises bus power control unit data processing capabilities.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 illustrates a typical prior art power distribution centralized bus architecture;
FIG. 2 illustrates a secondary power distribution assemblies (SPDA),in accordance with various embodiments;
FIG. 3 illustrates a secondary power distribution assemblies (SPDA), in accordance with various embodiments;
FIG. 4 illustrates a potential control segregation that complements distributed source selection and conversion, in accordance with various embodiments; and

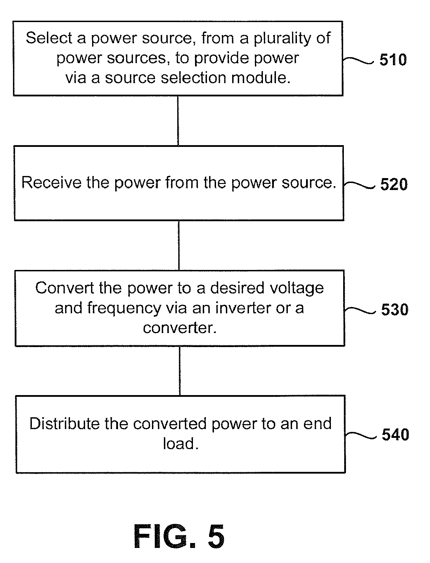

FIG. 5 illustrates a method of power source selection, power conversion and power distribution to a plurality of end loads, in accordance with various embodiments.

### DETAILED DESCRIPTION

The detailed description of exemplary embodiments herein makes reference to the accompanying drawings, which show exemplary embodiments by way of illustration and their best mode. While these exemplary embodiments are described in sufficient detail to enable those skilled in the art to practice the disclosure, it should be understood that other embodiments may be realized and that logical changes may be made without departing from the scope of the disclosure. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step.

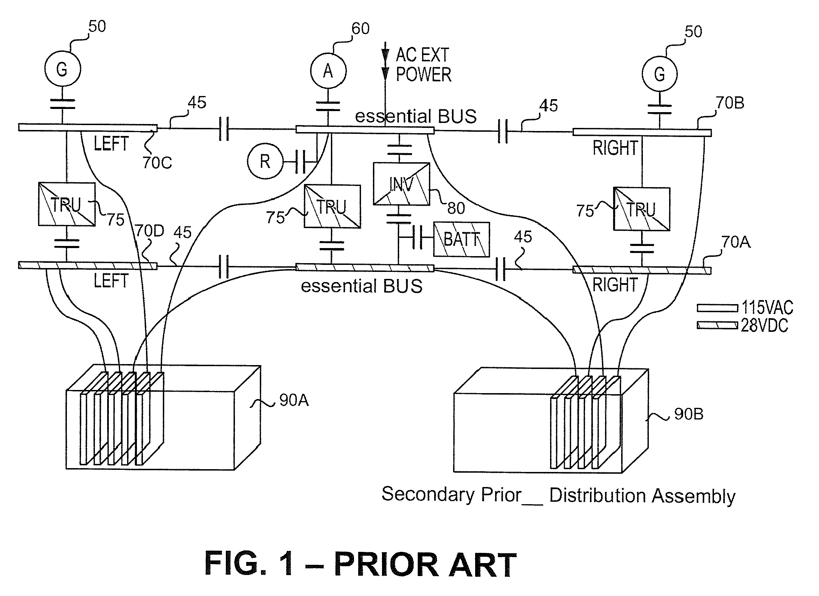

With reference to Prior Art FIG. 1, a typical power distribution architecture of an aircraft is illustrated. As shown, the generators 50 feed primary power distribution panels 70. The primary power distribution panels 70 convert the power received to a proper load voltage at a desired frequency. For instance, a generator 50 may output 230 volts and the primary power distribution panel 70 may receive and convert it into the various voltages and frequencies that are expected by the loads on the airplane, such as 28 volts, direct current (DC). The conversion of the generator's 50 output provided into those characteristic voltages has traditionally been accomplished in the centralized primary power distribution panels 70. The primary power distribution panels 70 may comprise a transformer rectifier unit 75, an inverter 80 and/or additional equipment to convert the received power to the voltages and frequencies requisite of the load. That converted power is fanned out to the loads. The converted power may either be fanned out from centralized panels or from a 28 volt trunk line that runs to a sub-panel, wherein the converted power is fanned our further at 28 volts. However, the primary power distribution panels 70 perform the conversion. The other function of the primary power distribution panels 70 is to provide redundant sources to the loads. The primary power distribution panels 70 may have bus ties 45 to connect between a left primary power distribution panel 70C or 70D and a right primary power distribution panels 70A or 70B. Stated another way, a left and a right primary distribution power panels 70A, 70B, 70C, and 70D may use a bus tie 45 that runs between them that can be closed so that if the left generator fails, the right generator can supply both the left and the right primary power distribution panel.

As shown, there is one feed coming from each bus for each secondary power distribution assembly 90, such as secondary power distribution assembly 90A and secondary power distribution assembly 90B. A disadvantage to the traditional architecture is the amount of power transmitted is the square of the current. If a load is associated with a certain amount of power at low voltage, the current associated with this constitute a relatively high value. Transmitting this power may lead to power loss and poor efficiency.

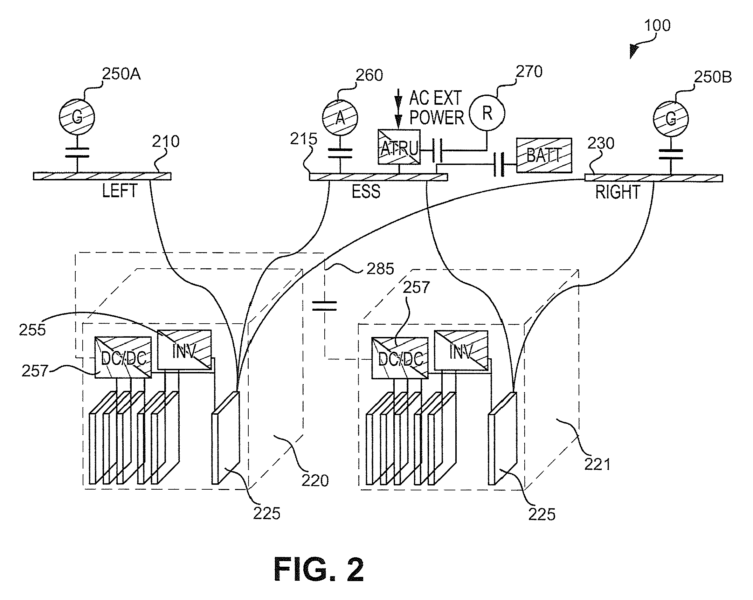

According to various embodiments and with reference to FIG 2, a localized source selection and power conversion power distribution system 100 (LSSPCPD) is illustrated. The system may be a direct current system and/or an alternating current LSSPCPD system 100. The power sources to the LSSPCPD system 100 may be one or more of a generator 250, such as left generator 250A and/or right generator 250B, and auxiliary generator 260, and a ram air turbine 270 or battery. Ram air turbine 270 may be an emergency generator. Direct feeds may be run from the power source to a power block, such as first power block 220 or second power block 221. The power blocks may form a power district that is logically grouped. The dotted lines in FIG.2 around first power block 220 and/or second power block 221 may designate items that are functionally grouped together logically. A power block may comprise a source selection module 225. The source selection module 225 may determine which power source, (e.g., left generator 250A, right generator 250B, auxiliary generator 260, and/or a ram air turbine 270, or battery) to utilize to provide power. The source selection module 225 may facilitate the delivery of the selected power source of power into localized converters, such as an inverter 255 or converter 257, (e.g., a DC to DC converter). The converters 257 may transmit the converted power to a sub-panel to feed a load. Post conversion link 285 may provide redundancy to the LSSPCPD system 100. For instance, if higher availability than one converter 257 can provide is needed, the converted output from a first power block 220 may be tied to the converted output of a second power block 221 to provide redundancy.

In contrast to legacy systems, where multiple bus tie connectors are coupled between the centralized buses, the LSSPCPD system 100 is, in general, solely linked by post conversion link 285. Notably, buses 210, 215 and 230 are independent, (e.g., are not tied together with contactors). This may enable LSSPCPD system 100 to withstand and/or manage failures. LSSPCPD system 100 is also configured to effectively balance the loads of the aircraft. For example, any power block 220 can receive power from any power source at any time. This is in contrast to conventional systems where one line from each bus was coupled to each sub-panel, which results in limited sources for the sub-panel.

LSSPCPD system 100 is configured to spread loads efficiently across more sources. Granularity and control is available within the architecture. LSSPCPD system 100 provides weight savings over conventional systems, as the wire gauge is decreased, bus ties are removed and equipment is grouped logically. Power conversion is granular, thus, failures are more isolated and contained. In response to a failure occurring, few items are simultaneously affected and recovery mechanisms are simpler with few "layers" for the crew or flight control system to manage. For instance, failures may be losses in the range of about 50 or 100 amps concurrently. This is in contrast to conventional systems where failures resulted in losses of about 300 or 400 amps concurrently.

According to various embodiments, in response to all the power districts being sourced by all power sources, any load in any district can be fed by any source. In this way, virtual "Essential" busses replace the hard wired single "essential bus" of conventional systems. This architecture leads to greater availability of redundant equipment, such as transponders. For instance, if only one of the two transponders is currently on the essential bus in the conventional system, in response to the transponder on the essential bus failing, then communications may be limited or unavailable. Greater communication availability may be available with the architecture of the LSSPCPD system 100. For instance, in LSSPCPD system 100 both transponders may be coupled to a virtual essential bus. This makes a power failure to both transponders unlikely. The likelihood of losing service of a component coupled to a virtual essential bus is low.

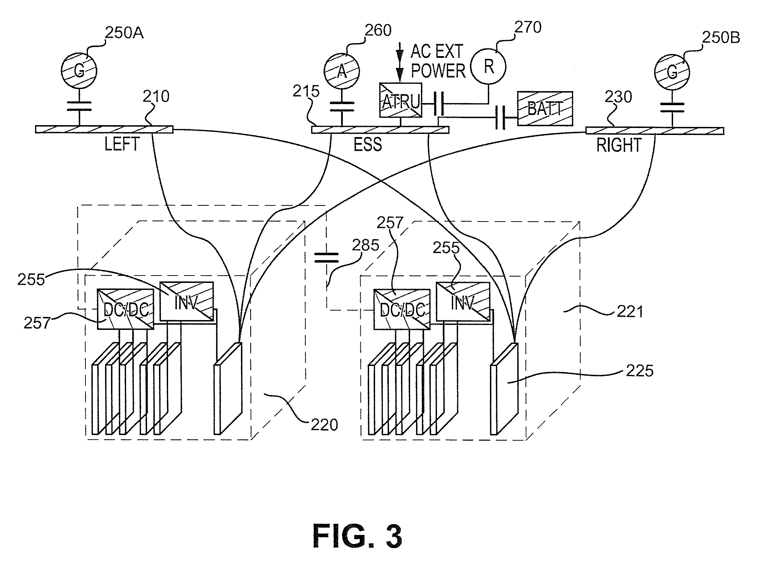

According to various embodiments, and with reference to FIG. 3, the architecture of LSSPCPD system 100 is designed such that any load on any sub-panel may be coupled to any power source. Thus, in essence, every load has availability to each power source. In this way, any load has equal availability to each power source as all of the power blocks may be tied to each power source.

Historically, in conventional systems, bus power control units are the units used to control bus ties that run between the centralized buses on the airplane. For instance, a bus power control units may control the transfer of power from the left bus to the essential bus or from the right bus to the essential bus. In contrast to conventional power distribution systems, in the architecture of LSSPCPD system 100 bus power control units are no longer standalone boxes, bus power control unit functionality is incorporated into the power block 220, thereby reducing the box count in the power distribution system.

According to various embodiments, different power blocks 220 may have different complements. For instance, in the nose of the airplane, the majority of the avionics may specify 28 volt DC. In the middle of the airplane, loads such as the landing gear hydraulics or brakes may specify 270 volts DC or 540 VDC. Power conversion may be customized based upon which power block 220 is being supplied. The number of different power blocks 220 may be configured as desired without limit.

According to various embodiments, control and communication networks have fewer layers leading to simpler testing of the LSSPCPD system 100. Bus power control units, redundancy contactors, secondary power distribution controllers, software controlled circuit breakers and generator control units of legacy systems are not present in the architecture of the LSSPCPD system 100. Thus, the communication lines (or redundant communication lines) tied to these systems are also not present. The design of the communication topology of LSSPCPD system 100 may be fairly flat.

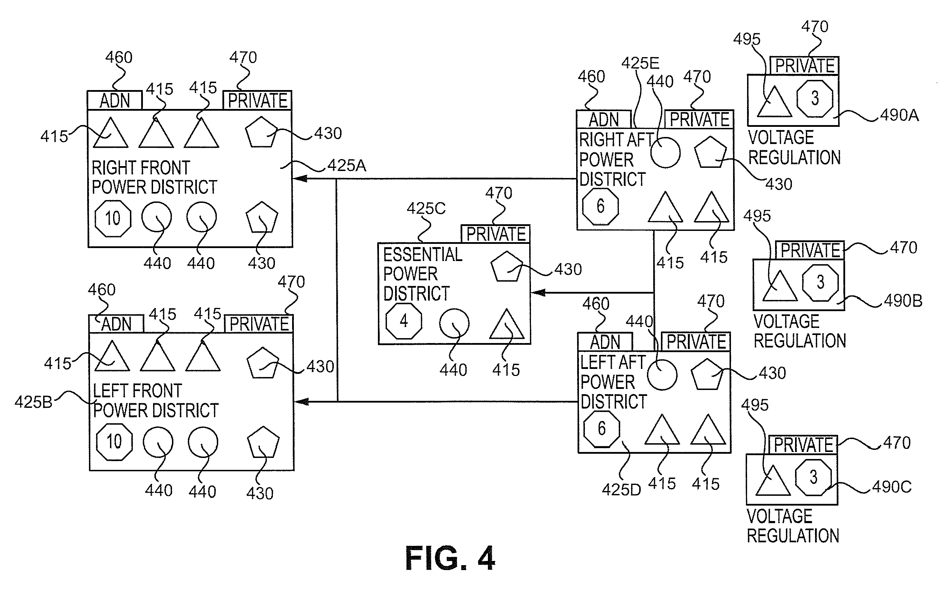

According to various embodiments and with reference to FIG. 4, a controls segregation scheme that complements distributed source selection and conversion making the system into a "Distributed IMA" system is illustrated. Power district 425A may comprise a higher data concentration as compared with other power districts of the controls segregation scheme. For instance, power district 425A may comprise air data sensors, the attitude heading reference sensors and/or the other sensors associated with the cockpit. Power district 425A may comprise power conversion modules 430. Power district 425A may comprise a plurality of power conversion modules 430 for redundancy purposes. Power district 425A may comprise power distribution modules 440, for instance to transmit 28 volts DC and/or 115 volts AC to loads of specification. Power district 425A may comprise a relative processing power on a scale of 1 to 10. Power district 425A may comprise a relative processing power of a 10 on a scale of 1 to 10. Power district 425A may comprise a coupling to the aircraft data network (AND) 460. The aircraft data network may be the backbone communication system for the aircraft communicating with the avionics system. Power district 425A may comprise a coupling to a private communication network 470 to transmit communications to the power distribution system. Power district 425B may a replicate of power district 425A, such as for redundancy purposes. Power district 425C may comprise a power distribution module 440, a power conversion modules 430, and a data concentration module 415. Power district 425C may comprise a relative processing power of about a 4 on a scale of 1 to 10.

Power district 425D may comprise a power distribution module 440, a power conversion module 430, and a plurality of data concentration modules 415. Power district 425D may comprise a relative processing power of about a 6 on a scale of 1 to 10. Power district 425E may be a replicate of power district 425D, such as for redundancy purposes. Voltage regulation boxes, 490A, 490B, 490C may comprise generator control units 495. Generator control units 495 may be configured to regulate the voltage out of the generator and determine when the generator is in a state that it can provide power to the rest of the system. Generator control units 495 may close a generator contactor and provide power. Voltage regulation boxes, 490A, 490B, 490C may comprise a relative processing power of about a 3 on a scale of 1 to 10.

According to various embodiments and with reference to FIG. 4, a method of power source selection, power conversion, energy storage and power distribution to a plurality of end loads is illustrated. The method may include selecting a power source, from a plurality of power sources, to provide power via a source selection module (Step 510).

The method may include receiving the power from the power source (Step 520).

The method may include converting the power to a desired voltage and frequency via an inverter or a converter (Step 530). The method may include distributing the converted power to an end load (Step 540).

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments. Different cross-hatching is used throughout the figures to denote different parts but not necessarily to denote the same or different materials.

## Claims

1. A localized power distribution system (100) comprising:
a power block (220, 221) coupled to a plurality of power sources (250A, 250B, 260, 270) comprising:
a source selection module (225); and
localized converters (255, 257) electrically coupled to the source selection module (225), wherein the power block (220, 221) is configured to perform power source selection, power conversion and power distribution to a plurality of end loads.

2. The localized power distribution system of claim 1, wherein the plurality of power sources (250A, 250B, 260, 270) to the localized power distribution system (100) provide at least one of alternating current or direct current.

3. The localized power distribution system of claim 1 or 2, wherein the plurality of power sources (250A, 250B, 260, 270) to the localized power distribution system (100) are at least one of a generator (250A, 250B), an auxiliary generator (260), or a ram air turbine (270), fuel cell, solar array, battery or other power generation/storage device.

4. The localized power distribution system of claim 1, 2 or 3, wherein the localized converters (255, 257) comprise at least one of an inverter (255) or a converter (257).

5. The localized power distribution system of any preceding claim, wherein the power block (220, 221) further comprises bus power control unit data processing capabilities.

6. The localized power distribution system of any preceding claim, further comprising a plurality of virtual essential busses (210, 215, 230).

7. The localized power distribution system of any preceding claim, further comprising a coupling to an aircraft data network (460) and a private communication network (470),
wherein the aircraft data network (460) is a communication system for communications with an avionics system, and
wherein the private communication network (470) is configured for transmitting communications to the localized power distribution system (100).

8. The localized power distribution system of any preceding claim, wherein the localized power distribution system (100) is disposed on a vehicle.

9. The localized power distribution system of any preceding claim, wherein the plurality of end loads coupled to the power block (220, 221) are logically grouped.

10. A method comprising:
selecting a power source (250A, 250B, 260, 270), from a plurality of power sources (250A, 250B, 260, 270), to provide power via a source selection module (225);
receiving the power from the power source (250A, 250B, 260, 270);
converting the power to a desired voltage and frequency; and
distributing the converted power to an end load.

11. The method of claim 10, wherein the plurality of power sources (250A, 250B, 260, 270) are at least one of a generator (250A, 250B), an auxiliary generator (260), or a ram air turbine (270), fuel cell, solar array, battery or other power generation/storage device.

12. The method of claim 10 or 11, wherein the converting is performed by at least one of an inverter (255) or a converter (257).

13. The method of claim 10, 11 or 12, wherein the end load is coupled to a virtual essential bus (210, 215, 230).

14. The method of any of claims 10 to 13, wherein the source selection module (225) is disposed on a vehicle.

15. The method of any of claims 10 to 14, wherein the source selection module (225) is grouped with a power block (220, 221), wherein the power block (220, 221) comprises bus power control unit data processing capabilities.
